# EUROPEAN PATENT SPECIFICATION

(11) **EP 4 451 455 B1**
(45) Date of publication and mention of the grant of the patent: **01.04.2026**
(21) Application number: 23745879.9
(22) Date of filing: 09.01.2023
(51) Int. Cl.: H01M 50/531, H01M 10/058, H01M 50/538, H01M 10/0525, H01M 10/0587, H01M 10/04

(54) **ELECTRODE ASSEMBLY, BATTERY AND MANUFACTURING METHOD THEREFOR**
ELEKTRODENANORDNUNG, BATTERIE UND HERSTELLUNGSVERFAHREN DAFÜR
ENSEMBLE ÉLECTRODE, BATTERIE ET PROCÉDÉ DE FABRICATION ASSOCIÉ

(30) Priority: 29.01.2022 CN 202210112016
(43) Date of publication of application: 23.10.2024
(73) Proprietor: Zhuhai CosMX Battery Co., Ltd., Zhuhai, Guangdong 519180 (CN)
(72) Inventor: LI, Tao, Zhuhai, Guangdong 519180 (CN)
(74) Representative: Bandpay & Greuter
(86) International application number: PCT/CN2023/071236
(87) International publication number: WO 2023/142994

(56) References cited:
- EP-A1- 3 609 012
- EP-A1- 3 926 716
- WO-A1-2021/227896
- CN-A- 113 644 230
- CN-A- 113 948 826
- CN-A- 114 497 914
- CN-U- 211 507 765
- CN-U- 216 750 226

## Description

### TECHNICAL FIELD

The present application relates to the technical field of batteries, and, in particular, to an electrode assembly, a battery and a manufacture method thereof.

### BACKGROUND

Lithium-ion batteries have been widely used in mobile phones, notebook computers and other products, and the requirement for their performance indicators is getting higher and higher. For example, lithium-ion batteries need to have high energy density, low impedance and other advantages, so the production process of lithium-ion batteries has gradually become a research hotspot.

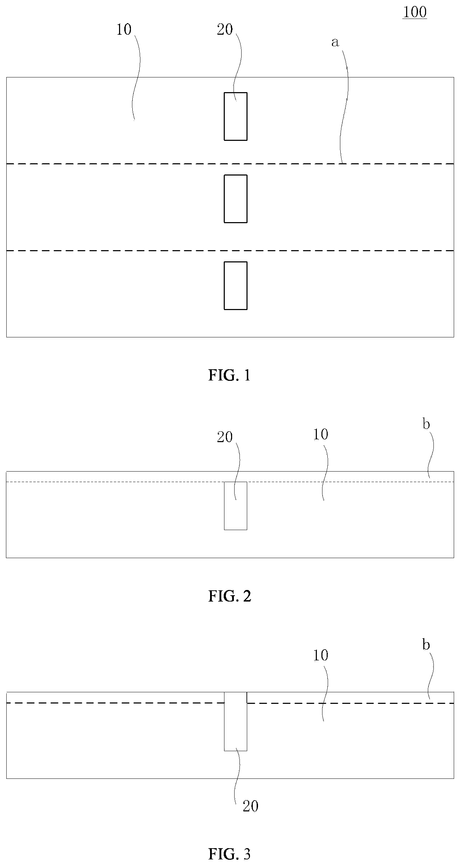

As shown in FIG. 1 to FIG. 3, a conventional lithium-ion battery includes electrically opposite electrode pieces, and each electrode piece includes a current collector and an active material layer coated on a side of the current collector, an edge of the active material layer is provided with a tab mounting groove, the tab mounting groove may be centrally disposed on the electrode piece, and one end of the tab mounting groove is open. One end of the tab is mounted into the tab mounting groove and is electrically connected with the current collector, and the other end of the tab protrudes from the current collector.

An existing production process of an electrode piece mainly includes the following steps: forming a pre-slitting mother roll 100 with a tab mounting groove 20, slitting the pre-slitting mother roll 100 along a slitting line *a* to form an electrode piece 10, where an active material layer (i.e., a reserved area b) is reserved between one side of the tab mounting groove 20 and an edge of the active material layer along a width direction of the electrode piece 10; and finally, welding a tab in the tab mounting groove 20. However, in order to reduce an overall thickness of a battery, it is necessary to punch the reserved active material layer at an edge side of the tab mounting groove 20, which leads to increased burrs and a risk of breakage of electrode piece after punching.

Prior art document EP 3 926 716 A1 discloses a current collector for electrodes, including: a polymer film; a metal piece, provided on at least one of upper and lower surfaces of the polymer film or one side of at least one of edges of the polymer film; an adhesive portion, provided on surfaces of the polymer film and the metal piece to cover a boundary portion of the polymer film and the metal piece; and a conductive material, formed on the surfaces of the polymer film, the metal piece and the adhesive portion. EP3609012A1 discloses a jelly-roll type battery with two electrodes and a separator, where one of the electrodes comprises a groove extending to the edge of the electrode in width direction. A tab is joined to the groove.

### SUMMARY

The present invention is defined in the appended set of claims. In view of the above problems, embodiments of the present application provide an electrode assembly, a battery and a manufacture method thereof, eliminating the need for punching the active material layer at the edge of the tab mounting groove, thereby avoiding increased burrs and the risk of breakage of electrode piece after punching.

In order to achieve the above object, embodiments of the present application provide the following technical solutions.

A first aspect of an embodiment of the present application provides an electrode assembly, including a separator, and a first electrode piece and a second electrode piece oppositely disposed on both sides of the separator, where the first electrode piece is electrically opposite to the second electrode piece; the first electrode piece includes a first tab and a first active material layer located on a surface of a side of the first electrode piece, the first active material layer is provided with a first tab mounting groove, and a reserved area is provided between one side of the first tab mounting groove and an edge of the first active material layer along a first direction, where the first direction refers to a width direction of the first electrode piece; a portion of the first tab is connected within the first tab mounting groove, and the first tab covers a portion of the reserved area to form a joint between the first tab and the reserved area; the second electrode piece includes a second active material layer located on a surface of a side of the second electrode piece, and the second active material layer is opposite to the first active material layer; and the second active material layer is provided with a groove opposite to the joint.

In a possible implementation, a surface of the first tab located at the joint is higher than a surface of the first tab located in the first tab mounting groove.

In a possible implementation, the groove is a groove with an opening, and the opening of the groove is located at an edge of the second active material layer.

In a possible implementation, an orthographic projection area of the groove on the first electrode piece is greater than or equal to an orthographic projection area of the joint on the first electrode piece.

In a possible implementation, an orthographic projection area of the groove on the first electrode piece is greater than or equal to an orthographic projection area of the first tab on the first electrode piece.

In a possible implementation, the first electrode piece further includes a first current collector; the first current collector includes two oppositely disposed surfaces, the two surfaces each are provided with the first active material layer, and at least one first active material layer is provided with the first tab mounting groove.

In a possible implementation, the second electrode piece includes a second current collector and a second tab; the second current collector includes two oppositely disposed surfaces, the two surfaces each are provided with the second active material layer, and at least one second active material layer is provided with the groove; the second tab is connected to the second current collector, and a connection position between the second tab and the second current collector is staggered with the groove.

In a possible implementation, two second active material layers each are provided with the groove, and the two grooves are opposite to each other.

A second aspect of an embodiment of the present application provides a battery, including a battery house and a plurality of the electrode assemblies according to the first aspect disposed within the battery house; and a separator is disposed between two adjacent electrode assemblies.

A third aspect of an embodiment of the present application provides a manufacture method of a battery, including the following steps:
obtaining a first electrode piece with a first tab mounting groove, where a reserved area is disposed between the first tab mounting groove and an edge of a first active material layer of the first electrode piece along a first direction;
mounting a first tab in the first tab mounting groove, where the first tab covers a portion of the reserved area, thereby forming a joint between the first tab and the reserved area;
obtaining a second electrode piece with a groove, where the groove is formed on a second active material layer of the second electrode piece, and the groove is matched with the joint;
providing a separator between the first electrode piece and the second electrode piece to form an electrode assembly; and
winding the electrode assembly and forming a cell structure of the battery.

Compared with the related technologies, the electrode assembly, the battery and the manufacture method thereof provided by embodiments of the present application have the following advantages.

According to the electrode assembly, the battery and the manufacture method thereof provided by embodiments of the present application, the electrode assembly includes a first electrode piece and a second electrode piece, which are oppositely disposed on both sides of a separator, where the first electrode piece and the second electrode piece have opposite polarities, a first active material layer of the first electrode piece is provided with a first tab mounting groove for mounting a first tab, a reserved area is provided between the first tab mounting groove and an edge of the first active material layer along a width direction of the first electrode piece, and when the first tab is mounted to the first tab mounting groove, the first tab covering a portion of the reserved area forms a joint between the first tab and the reserved area.

Correspondingly, the second active material layer of the second electrode piece is provided with a groove, the groove may be selectively disposed on a side of the second active material layer facing the joint, and the groove may be matched with the joint, that is, the groove may be set opposite to the joint, so as to ensure that at least a portion of the joint may be embedded in the groove when the electrode assembly is pressed together, thereby reducing the overall thickness of the battery. In this way, in order to achieve the purpose of reducing the overall thickness of the battery, there is no need to punch the active material layer reserved at the edge of the tab mounting groove, which may avoid increased burrs and the risk of breakage of electrode piece after punching.

In addition to the technical problems solved by embodiments of the present disclosure, the technical features constituting the technical solutions, and the beneficial effects brought by these technical features of the technical solutions, as described above, other technical problems that can be solved by the electrode assembly, the battery, and the manufacture method thereof provided by embodiments of the present disclosure, other technical features contained in the technical solutions, and the beneficial effects brought by these technical features will be described in further detail in the specific embodiments.

### BRIEF DESCRIPTION OF DRAWINGS

FIG. 1 is a schematic structural diagram of a pre-slitting mother roll in the prior art.
FIG. 2 is a schematic structural diagram of an electrode piece after slitting in the prior art.
FIG. 3 is a schematic structural diagram of an electrode piece after punching a reserved area in the prior art.
FIG. 4 is a top view of a first electrode piece provided in Embodiment 1 of the present application.
FIG. 5 is a cross-sectional view taken along line A-A of FIG. 4.
FIG. 6 is a top view of a second electrode piece provided in Embodiment 1 of the present application.
FIG. 7 is a cross-sectional view taken along line B-B of FIG. 6.
FIG. 8 is a first schematic structural diagram of the second electrode piece provided in Embodiment 1 of the present application.
FIG. 9 is a first schematic diagram of a laminated structure of the first and second electrode pieces provided in Embodiment 1 of the present application.
FIG. 10 is a second schematic diagram of a laminated structure of the first and second electrode pieces provided in Embodiment 1 of the present application.
FIG. 11 is a schematic flow chart of a manufacture method of a battery provided in Embodiment 3 of the present application.

### Description of reference numerals:

100 - pre-slitting mother roll;
10 - electrode piece;
20 - tab mounting groove;
a - slitting line; b - reserved area;
1 - first electrode piece;
11 - first current collector; 12 - first active material layer; 13 - first tab; 14 - first tab mounting groove;
2 - second electrode piece;
21 - second current collector; 22 - second active material layer; 23 - groove.

### DESCRIPTION OF EMBODIMENTS

As described in the background section, in the related art, there are problems of burrs on the edge of the electrode piece and the risk of breakage of the electrode piece during winding. The inventor has found through research that the reason for the problems is that, as shown in FIGS. 1 to 3, in an existing electrode piece manufacture process, a pre-slitting mother roll 100 is slit along a slitting line *a* to form an electrode pieces10, and an active material layer (i.e., a reserved area b) needs to be reserved between one side of a tab mounting groove 20 and an edge of the active material layer along a width direction of the electrode piece 10. After a tab is mounted into the tab mounting groove, a portion of the tab is stacked on the reserved area b, which increases a local thickness of the tab, thereby increasing the overall thickness of the battery. For this reason, it is necessary to punch the reserved active material layer on the side of the tab mounting groove, which leads to increased burrs and the risk of breakage of electrode piece after punching.

In view of the above technical problems, embodiments of the present application provide an electrode assembly, a battery and a manufacture method thereof, where the electrode assembly includes a first electrode piece and a second electrode piece oppositely disposed on two sides of a separator, and a reserved area is provided between a first tab mounting groove of the first electrode piece and an edge of a first active material layer. When the first tab is mounted into the first tab mounting groove, the first tab covering a portion of the reserved area forms a joint between the first tab and the reserved area. Correspondingly, a second active material layer of the second electrode piece is provided with a groove, and the groove may be matched with the joint. That is, the groove may be opposite to the joint, so as to ensure that at least a portion of the joint may be embedded in the groove when the electrode assembly is pressed, thereby reducing the overall thickness of the battery. In this way, there is no need to punch the active material layer reserved at the edge of the tab mounting groove, which may avoid increased burrs and the risk of breakage of electrode piece after punching.

In order to make the above purposes, features and advantages of embodiments of the present application more obvious and easier to be understood, the technical solutions in embodiments of the present application will be described clearly and completely in combination with the drawings in embodiments of the present application. Obviously, the described embodiments are some of embodiments of the present application, not all of the embodiments. Based on embodiments in the present application, all other embodiments obtained by those of ordinary skill in the art without creative work belong to the protection scope of the present application.

### Embodiment 1

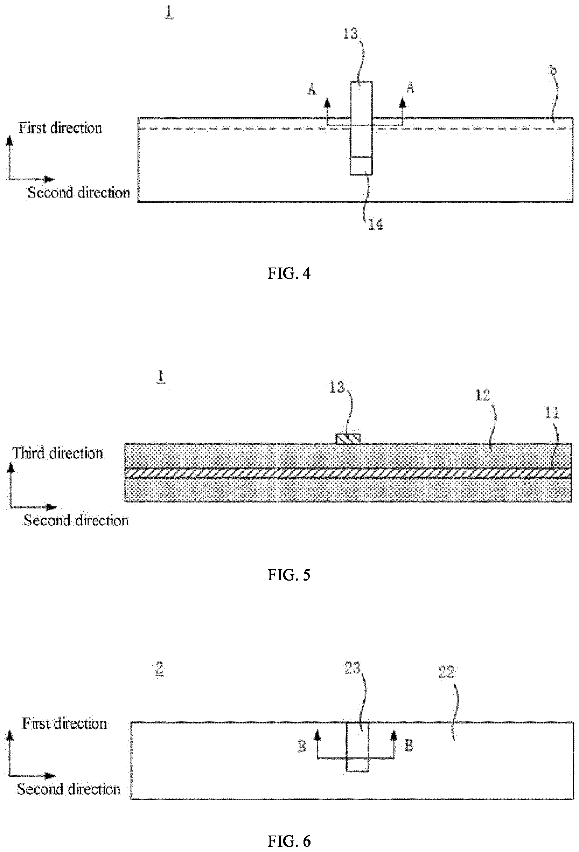

As shown in FIG. 4 and FIG. 5, an electrode assembly provided by this embodiment of the present application includes a first electrode piece 1. The first electrode piece 1 includes a first current collector 11, a first tab 13, and a first active material layer 12 disposed on at least a surface of a side of the first current collector 11. The first active material layer 12 is provided with a first tab mounting groove 14 for mounting the first tab 13.

It should be noted that, in order to increase the volume energy density of the electrode assembly, in this embodiment of the present application, the first active material layer 12 is preferably disposed on surfaces of both sides of the first current collector 11 respectively. One first active material layer 12 may be selected to be provided with the first tab mounting groove 14, and a portion of the first tab 13 is embedded in the first tab mounting groove 14 and is electrically connected to the first current collector 11.

Specifically, the first electrode piece 1 may be a positive electrode piece, the first current collector 11 is an aluminum foil, surfaces of both sides of the current collector 11 are covered with the first active material layer 12, and the first active material layer 12 may be formed by baking a positive active material slurry coated on the surfaces of the first current collector 11. For example, the positive active material slurry may include a glue solution and a mixture added to the glue solution, where the glue solution is prepared by mixing a binder and a solvent, and the mixture is prepared by uniformly mixing a positive active material and a conductive agent.

The first tab mounting groove 14 is disposed on one of the first active material layers 12 of the first electrode piece 1, and the first tab mounting groove 14 is centrally disposed on the first active material layer 12 along a length direction (i.e., a second direction) of the first electrode piece 1, so as to expose the first current collector 11 located in the region of the first tab mounting groove 14. Along a width direction (i.e., a first direction) of the first electrode piece 1, a reserved first active material layer 12 is provided between one side of the first tab mounting groove 14 and the first active material layer 12.

The first tab 13 is mounted into the first tab mounting groove 14 and electrically connected to the first current collector 11. Exemplarily, the first tab mounting groove 14 may be a rectangular groove, and the length direction of the first tab mounting groove 14 coincides with the first direction. The first tab 13 is matched with the first tab mounting groove 14, that is, the first tab 13 may also be a rectangular conductive bar. One end of the first tab 13 is disposed in the first tab mounting groove 14, and the other end of the first tab 13 passes through the reserved area b and extends to outside of the first tab 13. That is, a portion of the first tab 13 covers a portion of the reserved area b, thereby forming a joint between the first electrode piece 1 and the reserved area.

Further, in some embodiments, in order to mount the first tab 13 into the first tab mounting groove 14, the first active material layers 12 oppositely disposed in the first electrode piece 1 are each provided with the first tab mounting groove 14, and the two first tab mounting grooves 14 are oppositely disposed. The first tab 13 may be selectively disposed in one of the first tab mounting grooves 14.

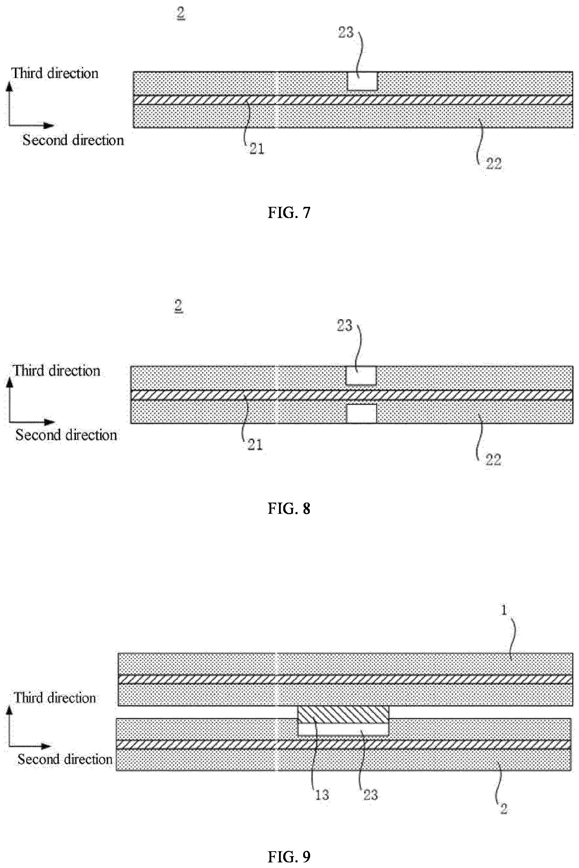

As shown in FIG. 6 and FIG. 7, the electrode assembly provided by this embodiment of the present application further includes a second electrode piece 2 and a separator (not shown), where the second electrode piece 2 and the first electrode piece 1 are disposed on both sides of the separator and are opposite to each other. The second electrode piece 2 includes a second current collector 21 and a second active material layer 22 disposed on at least a surface of a side of the second current collector 21, and the second active material layer 22 is provided with a groove 23 opposite to the joint.

Specifically, the second electrode piece 2 may be a negative electrode piece, the second current collector 21 may be a copper foil, the second active material layer 22 is covered on surfaces of both sides of the current collector 21, and the second active material layer 22 may be formed by baking a negative active material slurry coated on the surfaces of the second current collector 21. For example, the negative active material slurry may include a glue solution and a mixture added to the glue solution, where the glue solution is prepared by mixing a binder and a solvent, and the mixture is prepared by uniformly mixing a negative active material and a conductive agent.

As shown in FIG. 9, in this embodiment of the present application, the second electrode piece 2 is disposed opposite to the first electrode piece 1, and the groove 23 may be selectively disposed on the second active material layer 22 close to the joint. When the electrode assembly is wound, since the groove 23 is opposite to the joint and the joint is matched with the groove 23, it can be ensured that at least a portion of the joint may be embedded in the groove 23 when the first electrode piece 1 and the second electrode piece 2 are pressed together, so as to achieve the purpose of reducing the overall thickness of the battery.

Compared with the solution in the related art in which the active material layer in the reserved area is punched in order to reduce the overall thickness of the battery, which is easily lead to increased burrs and risk of breakage of electrode piece, the electrode assembly provided by the embodiments of the present application can reduce the overall thickness of the battery without punching the active material layer reserved at the edge of the tab mounting groove, thereby avoiding the increased burrs and the risk of breakage of electrode pieces after punching.

On the basis of the above embodiments, in embodiments of the present application, a surface of the first tab 13 located at the joint may be higher than the surface of the first tab 13 located in the first tab mounting groove 14, that is, an upper surface of the joint, which is formed by covering a portion of the first tab 13 on the reserved area is protruding over an upper surface of the first tab 13 mounted into the first tab mounting groove 14, thereby forming a tab protrusion of the first tab 13. This embodiment is illustrated by the example where the first tab 13 is formed with the tab protrusion in the reserved area.

Further referring to FIG. 6, the groove 23 provided on the second active material layer 22 in this embodiment of the present application is a groove with an opening. Specifically, along the width direction of the second electrode piece 2 (i.e., the first direction), the second active material layer 22 is provided with a groove 23 near an edge of the second active material layer 22, and the groove 23 may be a rectangular groove. Along the first direction, one end of the groove 23 is provided with an opening, that is, the groove 23 extends to the edge of the second active material layer 22, and there is no reserved active material layer between the groove 23 and the edge of the second active material layer 22. In this way, the tab protrusion of the first electrode piece 1 may be embedded into the groove 23 to reduce the overall thickness of the battery.

Further, in one implementation, an orthographic projection area of the groove 23 on the first electrode piece 1 may be greater than or equal to an orthographic projection area of the tab protrusion on the first electrode piece 1, so as to ensure that the tab protrusion may be embedded into the groove 23 when the first electrode piece 1 and the second electrode piece 2 are pressed together. Preferably, an orthographic projection area of the groove 23 on the second electrode piece 2 is larger than the orthographic projection area of the tab protrusion on the first electrode piece 1.

In another implementation, the orthogonal projection area of the groove 23 on the first electrode piece 1 is greater than or equal to an orthogonal projection area of the first tab 13 on the first electrode piece 1. Such a setting not only ensures that when the first electrode piece 1 and the second electrode piece 2 are pressed together, the tab protrusion may be embedded into the groove 23, but also may increase an area of the groove 23 to be flushed on the second active material layer 22, which is convenient for processing and control.

It should be noted that a depth of the groove 23 may be set according to a thickness of the tab protrusion protruding over its surrounding active material layer, i.e., according to a thickness of the first tab 13. For example, along a third direction, the depth of the groove 23 may occupy part of thickness of the second active material layer 22; or, the depth of the groove 23 may be consistent with the thickness of the second active material layer 22, that is, the groove 23 runs through to the second current collector 21. This is not limited in this embodiment. Preferably, the depth of the groove 23 is configured such that the tab protrusion may be completely embedded in the groove 23, which may further reduce the overall thickness of the battery.

On the basis of the above embodiments, in order to increase the volume energy density of the electrode assembly, in this embodiment of the present application, the second active material layer 22 is preferably disposed on surfaces of two sides of the second current collector 21, and the groove 23 opposite to the tab protrusion may be selectively disposed on one or two second active material layers 22 according to the thickness of the tab protrusion.

Specifically, as shown in FIG. 7 and FIG. 9, the second current collector 21 includes two opposite surfaces, and the two surfaces each are covered by the second active material layer 22, and the groove 23 may be selectively provided on the second active material layer 22 on one surface of the second current collector 21 according to the thickness of the tab protrusion of the first tab 13. Moreover, the groove 23 may be disposed close to the tab protrusion, that is, the groove 23 selectively provided on one second active material layer 22 is used to compensate for the thickness of the tab protrusion.

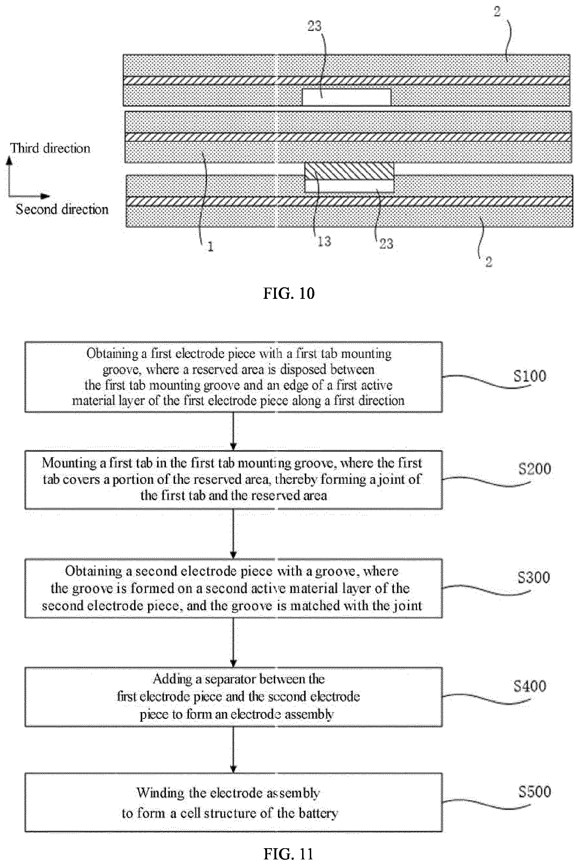

As shown in FIG. 8 and FIG. 10, in another implementation, according to the thickness of the tab protrusion of the first tab 13, the groove 23 may be selectively provided on the second active material layers 22 on both surfaces of the second current collector 21 respectively, and the two grooves 23 are opposite to the tab protrusion. When the first electrode piece 1 and the second electrode piece 2 are stacked and pressed together, the tab protrusion of the first electrode piece 1 may be partially embedded in one groove 23, and the other groove 23 may further compensate for the protruded thickness of the tab protrusion, so as to reduce the overall thickness of the battery.

The second electrode piece 2 provided by this embodiment of the present application further includes a second tab (not shown), a second tab mounting groove (not shown) is disposed on one of the second active material layers 22, and the second tab is mounted into the second tab mounting groove and electrically connected to the second current collector 21. The position of the second tab mounting groove is staggered with the position of the groove 23. That is, the second tab mounting groove and the groove 23 on the second electrode piece 2 are staggered along the second direction.

It should be noted that, when the second tab is connected to the second tab mounting groove, and the second tab has the tab protrusion, a groove may be correspondingly provided on the first active material layer 12 of the first electrode piece 1. Or, the first active material layer 12 is provided with a groove opposite to the tab protrusion of the second tab, and the second active material layer 22 is provided with a groove opposite to the tab protrusion of the first tab 1.

### Embodiment 2

This embodiment of the present application provides a battery, and this battery may be a lithium battery including a battery house and a plurality of electrode assemblies, where the plurality of electrode assemblies are stacked and disposed in the battery house, and two adjacent electrode assemblies are provided with a separator so as to isolate electrode pieces of each electrode assembly.

Each electrode assembly includes a first electrode piece 1, a second electrode piece 2, and a separator disposed between the first electrode piece 1 and the second electrode piece 2, where the separator is used for separating the first electrode piece 1 from the second electrode piece 2. A reserved area is provided between the first tab mounting groove 14 of the first electrode piece 1 and the edge of the first active material layer 12. When the first tab 13 is mounted into the first tab mounting groove 14, the first tab 13 covering a portion of the reserved area forms a joint.

Correspondingly, the second active material layer 22 of the second electrode piece 2 is provided with a groove 23, and the groove 23 may be matched with the joint, that is, the groove 23 may be opposite to the joint, so as to ensure that when the wound electrode assembly is pressed to form a battery, the joint may be embedded in the groove 23, thereby reducing the overall thickness of the battery. In this way, there is no need to punch the active material layer reserved at the edge of the first tab mounting groove 14, which may avoid increased burrs and the risk of breakage of electrode piece after punching.

### Embodiment 3

As shown in FIG. 11, this embodiment of the present application provides a manufacture method of a battery, including the following steps.

Step S100, obtaining a first electrode piece 1 with a first tab mounting groove 14, where a reserved area is disposed between the first tab mounting groove 14 and an edge of a first active material layer 12 along a first direction.

Specifically, referring to FIG. 1 and FIG. 2, a plurality of tab mounting grooves 20 are formed in a pre-slitting mother roll 100, and the plurality of tab mounting grooves 20 are located in middle of the pre-slitting mother roll 100; the plurality of tab mounting grooves 20 may be distributed at equal intervals along a width direction of the pre-slitting mother roll 100. The pre-slitting mother roll 100 is slit along a cutting line *a* to form a plurality of electrode pieces 10, each electrode piece 10 has a corresponding tab mounting groove 20, and a reserved area b is formed between each tab mounting groove 20 and an edge of the electrode piece 10 along a width direction of the electrode piece 10. It should be noted that the above electrode piece may be regarded as a first electrode piece 1, and the above tab mounting groove may be regarded as the first tab mounting groove 14.

Further, the above pre-slitting mother roll includes a first current collector 11 and a first active material layer 12 formed on the first current collector 11, and flushing is performed at a predetermined tab mounting position to form the first tab mounting groove 14. Before slitting the pre-slitting mother roll, the mother roll is rolled; in the first electrode piece 1 formed after slitting, along the width direction of the first electrode piece 1, a reserved first active material layer 12 is provided between one side of the tab mounting groove and an edge of the first active material layer 12, that is, a reserved area is provided between one side of the first tab mounting groove 14 and the edge of the first active material layer 12. For example, along the width direction of the first electrode piece 1, the width of the reserved portion of the first active material layer 12 is 0.5 mm-6 mm, preferably 1.5 mm.

Step S200, mounting a first tab 13 in the first tab mounting groove 14, where the first tab 13 covers a portion of the reserved area, thereby forming a joint between the first tab 13 and the reserved area.

Specifically, one end of the first tab 13 is embedded in the first tab mounting groove 14 and electrically connected to the first current collector 11, the other end of the first tab 13 passes through the reserved area and extends to outside of the first electrode piece 1, and a portion of the first tab 13 may cover a portion of the reserved area to form a joint, and the joint may protrude over the first active material layer 12 located around the first tab mounting groove 14, as shown in FIGS. 4 and 5.

Step S300, obtaining a second electrode piece 2 with a groove 23, where the groove 23 is formed on a second active material layer 22 of the second electrode piece 2, and the groove 23 is matched with the joint.

Specifically, the second electrode piece 2 is obtained, and the second active material layer 22 on the second electrode piece 2 is flashed to form the groove 23 on the second active material layer 22. Along a width direction of the second electrode piece 2, one end of the groove 23 extends to an edge of the second active material layer 22, so that the joint is embedded in the groove 23. For example, the thickness of the first tab 13 of the first electrode piece 1 is 100 um, the thickness of the second active material layer 22 on one side of the second electrode piece 2 is 70 um, and the second active material layers 22 on both sides of the second electrode piece 2 may be provided with the groove 23, and the two grooves 23 are opposite to each other and have a total thickness of 100 um, so as to complete the compensation for the thickness of the joint.

It should be noted that the above second electrode piece 2 may be formed into a plurality of second electrode pieces 2 by silting the mother roll, and positions of the second electrode pieces 2 corresponding to the joint are flashed to form the grooves 23 on the second electrode pieces 2, as shown in FIGS. 6 to 8.

Step S400, providing a separator between the first electrode piece 1 and the second electrode piece 2 to form an electrode assembly. Specifically, the first electrode piece 1 and the second electrode piece 2 are spaced apart from each other, and the joint is disposed opposite to the groove 23 of the second electrode piece 2, and the separator is provided between the first electrode piece 1 and the second electrode piece 2 to isolate the first electrode piece 1 from the second electrode piece 2, as shown in FIGS. 9 and 10.

Step S500, winding the electrode assembly and forming a cell structure of a battery.

According to the manufacture method of the battery, as provided by this embodiment of the present application, the overall thickness of the battery can be reduced without punching the active material layer reserved at the edge of the tab mounting groove, thereby avoiding increased burrs and the risk of breakage of the electrode piece after punching.

In this specification, embodiments or implementations are described in a progressive manner, and each embodiment focuses on the difference from other embodiments, and the same and similar parts of the embodiments may be referred to each other.

It should be noted that references in the specification to "one embodiment", "an embodiment", "an exemplary embodiment", "some embodiments", etc., indicate that the described embodiment(s) may include a particular feature, structure, or characteristic, but not necessarily every embodiment includes the particular feature, structure, or characteristic. Moreover, such terms do not necessarily refer to the same embodiment. Furthermore, in describing a particular feature, structure, or characteristic in conjunction with an embodiment, the realization of such a feature, structure, or characteristic in conjunction with other embodiment, regardless of whether it is explicitly described or not, is within the knowledge of a person skilled in the art.

In general, terms should be understood, at least in part, by their use in context. For example, the term "one or more" as used herein may be used to describe any feature, structure, or characteristic in singular, or may be used to describe a combination of features, structures, or characteristics in plural, depending, at least in part, on the context. Similarly, terms such as "a" and "an" or "the" may also be construed as being used in singular or in plural, depending, at least in part, on the context.

It should be readily understood that the terms "on", "over" and "above" in the present disclosure should be interpreted in the broadest manner, so that the term "on" not only means "directly on something", but also includes the meaning of "on something" with intermediate feature or layer in between, and that the terms "over" and "above" not only include the meaning of "over" or "above" something, but also include the meaning of "over" or "above" something with no intervening feature or layer in between (i.e., directly on something).

The term "layer" as used herein may refer to a material part including a region having a thickness. The layer may extend over the entire underlying or overlying structure or may be less than the underlying or overlying structure. Furthermore, the layer may be a region of a homogeneous or heterogeneous continuous structure, and has a thickness less than the thickness of the continuous structure. For example, a layer may be located between the top and bottom surfaces of the continuous structure or between any pair of transverse planes at the top and bottom surfaces. The layers may extend laterally, vertically, and/or along a tapered surface.

## Claims

1. An electrode assembly, comprising a separator, and a first electrode piece (1) and a second electrode piece (2) oppositely disposed on both sides of the separator, wherein the first electrode piece (1) is electrically opposite to the second electrode piece (2);
the first electrode piece (1) comprises a first tab (13) and a first active material layer (12) located on a surface of a side of the first electrode piece (1), the first active material layer (12) is provided with a first tab mounting groove (14), a portion of the first tab (13) is connected with the first tab mounting groove (14), and
the second electrode piece (2) comprises a second active material layer (22) located on a surface of a side of the second electrode piece (2), and the second active material layer (22) is opposite to the first active material layer (12); **characterized in that** a reserved area (b) is provided between one side of the first tab mounting groove (14) and an edge of the first active material (12) along a first direction, wherein the first direction refers to a width direction of the first electrode piece (1) and the first tab (13) covers a portion of the reserved area (b) to form a joint between the first tab (13) and the reserved area (b), and the second active material layer (22) is provided with a groove (23) opposite to the joint.

2. The electrode assembly according to claim 1, wherein a surface of the first tab (13) located at the joint is higher than a surface of the first tab (13) located in the first tab mounting groove (14).

3. The electrode assembly according to claim 1, wherein the groove (23) is a groove with an opening, and the opening of the groove (23) is located at an edge of the second active material layer (22).

4. The electrode assembly according to claim 1, wherein an orthographic projection area of the groove (23) on the first electrode piece (1) is greater than or equal to an orthographic projection area of the joint on the first electrode piece (1).

5. The electrode assembly according to claim 1, wherein an orthographic projection area of the groove (23) on the first electrode piece (1) is greater than or equal to an orthographic projection area of the first tab (13) on the first electrode piece (1).

6. The electrode assembly according to claim 1, wherein the first electrode piece (1) further comprises a first current collector (11); and
the first current collector (11) comprises two oppositely disposed surfaces, the two surfaces each are provided with the first active material layer (12), and at least one first active material layer (12) is provided with the first tab mounting groove (14).

7. The electrode assembly according to any one of claims 1-6, wherein the second electrode piece (2) comprises a second current collector (21) and a second tab;
the second current collector (21) comprises two oppositely disposed surfaces, the two surfaces each are provided with the second active material layer (22), and at least one second active material layer (22) is provided with the groove (23); and
the second tab is connected to the second current collector (21), and a connection position between the second tab and the second current collector (21) is staggered with the groove (23).

8. The electrode assembly according to claim 7, wherein the two second active material layers (22) each are provided with the groove (23), and the two grooves (23) are opposite to each other.

9. A battery, comprising a battery house and a plurality of the electrode assemblies according to any one of claims 1-8 disposed within the battery house; wherein
a separator is disposed between two adjacent electrode assemblies.

10. A manufacture method of a battery, comprising the following steps:
obtaining a first electrode piece (1) with a first tab mounting groove (14), where a reserved area (b) is disposed between the first tab mounting groove (14) and an edge of a first active material layer (12) of the first electrode piece (1) along a first direction, wherein the first direction refers to a width direction of the first electrode piece (1);
mounting a first tab (13) in the first tab mounting groove (14), where the first tab (13) covers a portion of the reserved area (b), thereby forming a joint between the first tab (13) and the reserved area (b);
obtaining a second electrode piece (2) with a groove (23), where the groove (23) is formed on a second active material layer (22) of the second electrode piece (2), and the groove (23) is matched with the joint;
providing a separator between the first electrode piece (1) and the second electrode piece (2) to form an electrode assembly; and
winding the electrode assembly and forming a cell structure of the battery.

## Patentansprüche

1. Elektrodenanordnung umfassend einen Trennelement und ein erstes Elektrodenteil (1) und ein zweites Elektrodenteil (2), die auf beiden Seiten des Trennelements einander gegenüberliegend angeordnet sind, wobei das erste Elektrodenteil (1) elektrisch gegenüber dem zweiten Elektrodenteil (2) ist;
das erste Elektrodenteil (1) eine erste Lasche (13) und eine erste aktive Materialschicht (12) umfasst, die sich auf einer Oberfläche einer Seite des ersten Elektrodenteils (1) befinden, wobei die erste aktive Materialschicht (12) mit einer ersten Laschenmontagenut (14) versehen ist, wobei ein Abschnitt der ersten Lasche (13) mit der ersten Laschenmontagenut (14) verbunden ist, und
das zweite Elektrodenteil (2) eine zweite aktive Materialschicht (22) umfasst, die sich auf einer Oberfläche einer Seite des zweiten Elektrodenteils (2) befindet, und die zweite aktive Materialschicht (22) gegenüber der ersten aktiven Materialschicht (12) ist;
**dadurch gekennzeichnet, dass** ein vorbehaltener Bereich (b) zwischen einer Seite der ersten Laschenmontagenut (14) und einem Rand des ersten aktiven Materials (12) entlang einer ersten Richtung bereitgestellt ist, wobei sich die erste Richtung auf eine Breitenrichtung des ersten Elektrodenteils (1) bezieht und die erste Lasche (13) einen Abschnitt des vorbehaltenen Bereichs (b) bedeckt, um eine Verbindung zwischen der ersten Lasche (13) und dem vorbehaltenen Bereich (b) zu bilden, und die zweite aktive Materialschicht (22) mit einer Nut (23) gegenüber der Verbindung versehen ist.

2. Elektrodenanordnung nach Anspruch 1, wobei eine Oberfläche der ersten Lasche (13), die sich an der Verbindung befindet, höher ist als eine Oberfläche der ersten Lasche (13), die sich in der ersten Laschenmontagenut (14) befindet.

3. Elektrodenanordnung nach Anspruch 1, wobei die Nut (23) eine Nut mit einer Öffnung ist und sich die Öffnung der Nut (23) an einem Rand der zweiten aktiven Materialschicht (22) befindet.

4. Elektrodenanordnung nach Anspruch 1, wobei eine orthographische Projektionsfläche der Nut (23) an dem ersten Elektrodenteil (1) größer als oder gleich wie eine orthographischen Projektionsfläche der Verbindung an dem ersten Elektrodenteil (1) ist.

5. Elektrodenanordnung nach Anspruch 1, wobei eine orthographische Projektionsfläche der Nut (23) an dem ersten Elektrodenteil (1) größer als oder gleich wie eine orthographischen Projektionsfläche der ersten Lasche (13) an dem ersten Elektrodenteil (1) ist.

6. Elektrodenanordnung nach Anspruch 1, wobei das erste Elektrodenteil (1) ferner einen ersten Stromkollektor (11) umfasst; und
der erste Stromkollektor (11) zwei gegenüberliegende Oberflächen umfasst, die zwei Oberflächen jeweils mit der ersten aktiven Materialschicht (12) versehen sind und mindestens eine erste aktive Materialschicht (12) mit der ersten Laschenmontagenut (14) versehen ist.

7. Elektrodenanordnung nach einem der Ansprüche 1-6, wobei das zweite Elektrodenteil (2) einen zweiten Stromkollektor (21) und eine zweite Lasche umfasst;
der zweite Stromkollektor (21) zwei gegenüber angeordnete Oberflächen umfasst, die zwei Oberflächen jeweils mit der zweiten aktiven Materialschicht (22) versehen sind und mindestens eine zweite aktive Materialschicht (22) mit der Nut (23) versehen ist; und
die zweite Lasche mit dem zweiten Stromkollektor (21) verbunden ist, und eine Verbindungsposition zwischen der zweiten Lasche und dem zweiten Stromkollektor (21) von der Nut (23) versetzt ist.

8. Elektrodenanordnung nach Anspruch 7, wobei die zwei zweiten aktiven Materialschichten (22) jeweils mit der Nut (23) versehen sind und die zwei Nuten (23) einander gegenüber sind.

9. Batterie, umfassend ein Batteriegehäuse und eine Vielzahl von Elektrodenanordnungen nach einem der Ansprüche 1-8, die innerhalb des Batteriegehäuses angeordnet sind, wobei
ein Trennelement zwischen zwei angrenzend Elektrodenanordnungen angeordnet ist.

10. Herstellungsverfahren einer Batterie, umfassend die folgenden Schritte:
Erlangen eines ersten Elektrodenteils (1) mit einer ersten Laschenmontagenut (14), wobei ein vorbehaltener Bereich (b) zwischen der ersten Laschenmontagenut (14) und einem Rand einer ersten aktiven Materialschicht (12) des ersten Elektrodenteils (1) entlang einer ersten Richtung angeordnet ist, wobei sich die erste Richtung auf eine Breitenrichtung des ersten Elektrodenteils (1) bezieht;
Montieren einer ersten Lasche (13) in der ersten Laschenmontagenut (14), wobei die erste Lasche (13) einen Abschnitt des vorbehaltenen Bereichs (b) abdeckt, wodurch eine Verbindung zwischen der ersten Lasche (13) und dem vorbehaltenen Bereich (b) gebildet wird;
Erlangen eines zweiten Elektrodenteils (2) mit einer Nut (23), wobei die Nut (23) an einer zweiten aktiven Materialschicht (22) des zweiten Elektrodenteils (2) gebildet ist und die Nut (23) an die Verbindung angepasst ist;
Bereitstellen eines Trennelements zwischen dem ersten Elektrodenteil (1) und dem zweiten Elektrodenteil (2), um eine Elektrodenanordnung zu bilden; und
Wickeln der Elektrodenanordnung und Bilden einer Zellstruktur der Batterie.

## Revendications

1. Ensemble d'électrode, comprenant un séparateur, et une première partie d'électrode (1) et une deuxième partie d'électrode (2) disposées de manière opposée des deux côtés du séparateur, dans lequel la première partie d'électrode (1) est électriquement opposée à la deuxième partie d'électrode (2) ;
la première partie d'électrode (1) comprend une première languette (13) et une première couche de matériau actif (12) situées sur une surface d'un côté de la première partie d'électrode (1), la première couche de matériau actif (12) est munie d'une première rainure de montage de languette (14), une partie de la première languette (13) est reliée à la première rainure de montage de languette (14), et
la deuxième partie d'électrode (2) comprend une deuxième couche de matériau actif (22) située sur une surface d'un côté de la deuxième partie d'électrode (2), et la deuxième couche de matériau actif (22) est opposée à la première couche de matériau actif (12) ; **caractérisé en ce qu'**une zone réservée (b) est prévue entre un côté de la première rainure de montage de languette (14) et un bord du premier matériau actif (12) le long d'une première direction, dans lequel la première direction se rapporte à un sens de la largeur de la première partie d'électrode (1) et la première languette (13) recouvre une partie de la zone réservée (b) afin de former un joint entre la première languette (13) et la zone réservée (b),
et la deuxième couche de matériau actif (22) est munie d'une rainure (23) opposée au joint.

2. Ensemble d'électrode selon la revendication 1, dans lequel une surface de la première languette (13) située au niveau du joint est plus élevée qu'une surface de la première languette (13) située dans la première rainure de montage de languette (14).

3. Ensemble d'électrode selon la revendication 1, dans lequel la rainure (23) est une rainure avec une ouverture, et l'ouverture de la rainure (23) est située au niveau d'un bord de la deuxième couche de matériau actif (22).

4. Ensemble d'électrode selon la revendication 1, dans lequel une surface de projection orthographique de la rainure (23) sur la première partie d'électrode (1) est supérieure ou égale à une surface de projection orthographique du joint sur la première partie d'électrode (1).

5. Ensemble d'électrode selon la revendication 1, dans lequel une surface de projection orthographique de la rainure (23) sur la première partie d'électrode (1) est supérieure ou égale à une surface de projection orthographique de la première languette (13) sur la première partie d'électrode (1).

6. Ensemble d'électrode selon la revendication 1, dans lequel la première partie d'électrode (1) comprend en outre un premier collecteur de courant **(11)** ; et
le premier collecteur de courant (11) comprend deux surfaces disposées de manière opposée, les deux surfaces étant chacune munies de la première couche de matériau actif (12), et au moins une première couche de matériau actif (12) est munie de la première rainure de montage de languette (14).

7. Ensemble d'électrode selon l'une quelconque des revendications 1 à 6, dans lequel la deuxième partie d'électrode (2) comprend un deuxième collecteur de courant (21) et une deuxième languette ;
le deuxième collecteur de courant (21) comprend deux surfaces disposées de manière opposée, les deux surfaces sont chacune munies de la deuxième couche de matériau actif (22), et au moins une deuxième couche de matériau actif (22) est munie de la rainure (23) ; et
la deuxième languette est reliée au deuxième collecteur de courant (21), et une position de raccordement entre la deuxième languette et le deuxième collecteur de courant (21) est échelonnée avec la rainure (23).

8. Ensemble d'électrode selon la revendication 7, dans lequel les deux deuxièmes couches de matériau actif (22) sont chacune munies de la rainure (23), et les deux rainures (23) sont opposées l'une à l'autre.

9. Batterie, comprenant un logement de batterie et une pluralité des ensembles d'électrode selon l'une quelconque des revendications 1 à 8 disposés dans le logement de batterie ; dans laquelle
un séparateur est disposé entre deux ensembles d'électrode adjacents.

10. Procédé de fabrication d'une batterie, comprenant les étapes suivantes :
l'obtention d'une première partie d'électrode (1) avec une première rainure de montage de languette (14), une zone réservée (b) étant disposée entre la première rainure de montage de languette (14) et un bord de la première couche de matériau actif (12) de la première partie d'électrode (1) le long d'une première direction, dans lequel la première direction se rapporte à un sens de la largeur de la première partie d'électrode (1) ;
le montage d'une première languette (13) dans la première rainure de montage de languette (14), la première languette (13) recouvrant une partie de la zone réservée (b), formant ainsi un joint entre la première languette (13) et la zone réservée (b) ;
l'obtention d'une deuxième partie d'électrode (2) avec une rainure (23), la rainure (23) étant formée sur une deuxième couche de matériau actif (22) de la deuxième partie d'électrode (2), et la rainure (23) correspondant avec le joint ;
le fait de prévoir un séparateur entre la première partie d'électrode (1) et la deuxième partie d'électrode (2) afin de former un ensemble d'électrode ; et
le bobinage de l'ensemble d'électrode et la formation d'une structure de cellules de la batterie.
